(19) Europäisches Patentamt
European Patent Office
Office européen des brevets

(11) **EP 4 390 080 B1**

(12) **EUROPÄISCHE PATENTSCHRIFT**

(45) Veröffentlichungstag und Bekanntmachung des Hinweises auf die Patenterteilung:
**22.04.2026 Patentblatt 2026/17**

(21) Anmeldenummer: **23216410.3**

(22) Anmeldetag: **13.12.2023**

(51) Internationale Patentklassifikation (IPC):
*F01P 11/16* (2006.01)  *F02N 19/10* (2010.01)
*F02N 19/04* (2010.01)  *F02D 41/22* (2006.01)
*B60H 1/03* (2006.01)  *F02B 77/08* (2006.01)
*F02D 41/06* (2006.01)  *F01P 11/20* (2006.01)
*B60H 1/00* (2006.01)  *B60K 11/02* (2006.01)
*F01P 7/16* (2006.01)  *F01P 7/14* (2006.01)

(52) Gemeinsame Patentklassifikation (CPC):
**F02D 41/222; B60H 1/00778; B60H 1/03; B60H 1/034; B60K 11/02; F01P 11/16; F01P 11/20; F02N 19/10;** F01P 7/162; F01P 2007/146; F01P 2025/32; F01P 2037/02; F01P 2060/08; F01P 2060/18; F02D 41/064;      (Forts.)

(54) **VERFAHREN UND VORRICHTUNG ZUM ERKENNEN DES BETRIEBS EINER MOTORUNABHÄNGIGEN ZUSATZHEIZUNG UND ZUR DIAGNOSE EINES KÜHLMITTELTEMPERATURSENSORS EINES KRAFTFAHRZEUGS**

METHOD AND DEVICE FOR DETECTING THE OPERATION OF AN ENGINE-INDEPENDENT AUXILIARY HEATING AND FOR DIAGNOSING A COOLANT TEMPERATURE SENSOR OF A MOTOR VEHICLE

PROCÉDÉ ET DISPOSITIF DE DÉTECTION DU FONCTIONNEMENT D'UN CHAUFFAGE AUXILIAIRE INDÉPENDANT DU MOTEUR ET DE DIAGNOSTIC D'UN CAPTEUR DE TEMPÉRATURE DE LIQUIDE DE REFROIDISSEMENT D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **23.12.2022 DE 102022214357**

(43) Veröffentlichungstag der Anmeldung:
**26.06.2024 Patentblatt 2024/26**

(73) Patentinhaber: **VOLKSWAGEN AG 38440 Wolfsburg (DE)**

(72) Erfinder: **Borchert, Tristan 38104 Braunschweig (DE)**

(56) Entgegenhaltungen:
**DE-A1- 102007 045 370      DE-A1- 4 426 494 DE-B3- 102009 058 514      DE-B3- 102011 088 409 DE-B4- 102005 003 251      DE-B4- 102009 057 586**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)
F02D 2200/021

**Beschreibung**

Technisches Gebiet

Die Erfindung betrifft ein Verfahren zum Erkennen des Betriebs einer motorunabhängigen Zusatzheizung in einem Kühlmittelsystem eines Fahrzeugs zum Vermeiden von Fehldiagnosen eines Kühlmitteltemperatursensors beim Kaltstart.

Technischer Hintergrund

Das Kühlmittelsystem eines Kraftfahrzeugs dient zum Wärmetransport zwischen wärmeabgebenden Komponenten, wie z.B. einem Motor, und wärmeaufnehmenden Komponenten, wie z.B. dem Motorkühler, der Innenraumheizung und dergleichen. Das Kühlmittelsystem wird mit einem in einem Rohrleitungssystem zwischen den Komponenten des Kühlmittelsystems zirkulierenden Kühlmittel gebildet.

Bei geringen Außentemperaturen wird das Kühlmittelsystem auch dazu genutzt, Abwärme des Motors der Innenraumheizung zuzuführen. Ist eine motorbetriebsunabhängige Zusatzheizung vorgesehen, so ist diese an das Kühlmittelsystem angeschlossen, damit die Möglichkeit besteht, den Fahrzeuginnenraum über die Innenraumheizung zu heizen.

Die Kenntnis der Kühlmitteltemperatur ist beim Betrieb des Verbrennungsmotors für eine optimale Ansteuerung notwendig, um erhöhte Schadstoffemissionen oder eine Schädigung des Verbrennungsmotors zu vermeiden.

Daher ist es erforderlich, eine regelmäßige Überprüfung der Funktionsfähigkeit des Kühlmitteltemperatursensors vorzunehmen. So kann eine herkömmliche Überwachung vorsehen, den Temperaturmesswert des Kühlmitteltemperatursensors bei einem Kaltstart des Verbrennungsmotors zu detektieren und unter anderem mit der Umgebungstemperatur zu vergleichen. Befindet sich jedoch eine mit dem Kühlmittelsystem in Verbindung stehende motorbetriebsunabhängige Zusatzheizung in dem Kraftfahrzeug, so führt diese Überprüfung zu einer fälschlichen Fehlererkennung (false positive), wenn die Zusatzheizung zuvor bei deaktiviertem Fahrzeug aktiv war.

Die Druckschrift DE 10 2009 058 514 B3 offenbart ein Verfahren zum Überwachen eines Kühlmitteltemperatursensors und/oder eines Zylinderkopftemperatursensors eines Kraftfahrzeugs, wobei bei einem Start eines Verbrennungsmotors des Kraftfahrzeugs durch den Kühlmitteltemperatursensor ein Istwert der Kühlmitteltemperatur, und durch einen Zylinderkopftemperatursensor ein Istwert der Zylinderkopftemperatur bestimmt wird, wobei der Kühlmitteltemperatursensor und/oder der Zylinderkopftemperatursensor bei einer gleichsinnigen Abweichung der Istwerte der Kühlmitteltemperatur und der Zylinderkopftemperatur nach oben in Bezug auf eine Außentemperatur und/oder eine Ansauglufttemperatur als ein funktionstüchtiger Sensor diagnostiziert wird.

Die Druckschrift DE 10 2005 003 251 B4 offenbart ein Verfahren zum Prüfen eines Motorkühlmitteltemperaturfühlers in einem Fahrzeug mit einem Prozessor, mit den folgenden Schritten: Empfangen eines MKT-Messdatenwertes von dem Motorkühlmitteltemperaturfühler und eines Ansauglufttemperatur-Messdatenwertes; Bewerten der Temperaturdifferenz zwischen dem MKT-Messdatenwert und dem Ansauglufttemperatur-Messdatenwert, um zu bestimmen, ob Irrationalität vorliegt, wobei der Bewertungsschritt das Überwachen des Ansauglufttemperatur-Messdatenwertes während des Betriebs des Fahrzeugs umfasst, um das Vorhandensein einer Motorblockheizung zu erkennen, falls die Temperaturdifferenz einen im Voraus festgelegten Schwellenwert überschreitet; und Bereitstellen eines Hinweises auf die Rationalität in Reaktion auf den Bewertungsschritt.

Die Druckschrift DE 10 2011 088 409 B3 offenbart ein Verfahren zum Überwachen eines Temperatursensors für ein Kühlmittel eines Verbrennungsmotors, mit folgenden Schritten: Abtasten der Kühlmitteltemperatur mittels des Temperatursensors, Bestimmen einer oberen Vergleichstemperatur auf der Basis der Umgebungstemperatur des Verbrennungsmotors, Bestimmen, dass die Kühlmitteltemperatur über der oberen Vergleichstemperatur liegt, Erfassen eines erfolglosen ersten Startversuchs des Verbrennungsmotors unter ersten Betriebsparametern, die zur Kühlmitteltemperatur korrespondieren, Erfassen eines erfolgreichen zweiten Startversuchs des Verbrennungsmotors unter zweiten Betriebsparametern, die zu einer Ersatztemperatur korrespondieren, die kleiner als die Kühlmitteltemperatur ist; und Bestimmen, dass der Temperatursensor defekt ist.

Die Druckschrift DE 10 2009 057 586 A1 offenbart ein Verfahren zum Überwachen eines Kühlmittel-Temperatursensors eines Kraftfahrzeugs, wobei bei einem Start eines Verbrennungsmotors des Kraftfahrzeugs durch einen Kühlmittel-Temperatursensor ein Istwert einer Kühlmitteltemperatur bestimmt wird, und der Kühlmittel-Temperatursensor bei einem sich an den Start des Verbrennungsmotors zeitlich kurzfristig anschließenden Absinken des Istwerts der Kühlmitteltemperatur, als ein funktionstüchtiger Kühlmittel-Temperatursensor diagnostiziert wird.

Die Druckschrift DE 10 2007 045 370 A1 offenbart ein Verfahren zur Bestimmung einer Leistungsfähigkeit eines Kühlsystems eines Kraftfahrzeugs mit einem Retarder als Funktion einer Temperatur eines Kühlmittels, wobei ein Temperaturgradient des Kühlmittels unmittelbar nach einer Bremsung des Retarders ermittelt wird, wobei die Leistungsfähigkeit des Kühlsystems abhängig von Größe des Temperaturgradienten bestimmt wird.

Die Druckschrift DE 44 26 494 A1 offenbart eine Einrichtung zur Überwachung des Kühlsystems bei einer Brennkraftmaschine, mit einem Temperatursensor, der ein für das Kühlsystem charakteristisches Temperatursignal erzeugt, und einer Auswerteeinrichtung, die das Temperatursignal auswertet und bei erkanntem Fehler eine Anzeige auslöst, wobei der Verlauf des Temperatursignales ausgewertet wird und erkannte Temperaturänderungen pro Zeiteinheit mit plausiblen Werten verglichen werden.

Durch die Kopplung des Kühlmittelsystems mit der Zusatzheizung in einem Kraftfahrzeug kann schon vor dem Start des Motorsystems Wärme in einen Kühlmittelkreislauf eingetragen werden, in dem sich auch ein motorbetriebsrelevanter Temperatursensor befindet. Dies führt dazu, dass der Kühlmitteltemperatursensor entsprechend mit Kühlmittel mit einer gegenüber der Umgebungstemperatur deutlich erhöhten Temperatur umspült wird. Da nicht in jedem Fall ein vorangehender Betrieb der Zusatzheizung in einem Kraftfahrzeug separat signalisiert wird, steht seitens der Diagnosefunktion zunächst keine Information darüber zur Verfügung, ob ein gemäß der obigen Vorgehensweise festgestellter Temperaturunterschied aufgrund einer Fehlfunktion des Kühlmitteltemperatursensors oder aufgrund eines Betriebs der Zusatzheizung verursacht wird.

Es ist Aufgabe der vorliegenden Erfindung, ein Verfahren und eine Vorrichtung zum Erkennen eines Betriebs eines Kühlmitteltemperatursensors in einem Kühlmittelsystem mit mehreren Kühlmittelkreisläufen in einem Fahrzeugsystem mit einer Zusatzheizung zur Verfügung zu stellen, mit der der Betrieb einer Zusatzheizung vor einem Motorstart festgestellt werden kann.

Offenbarung der Erfindung

Diese Aufgabe wird durch das Verfahren zum Feststellen des Betriebs einer motorunabhängigen Zusatzheizung vor einem Motorstart und zur Diagnose eines Kühlmitteltemperatursensors in einem Kühlmittelsystem mit mehreren Kühlmittelkreisläufen gemäß Anspruch 1 sowie durch eine entsprechende Vorrichtung und eine Diagnosefunktion gemäß den nebengeordneten Ansprüchen gelöst.

Weitere Ausgestaltungen sind in den abhängigen Ansprüchen angegeben.

Gemäß einem ersten Aspekt ist ein Verfahren zum Erkennen eines Betriebs einer motorunabhängigen Zusatzheizung in einem Kühlmittelsystem mit mehreren Kühlmittelkreisläufen in einem Fahrzeugsystem, mit folgenden Schritten:

- Bei oder nach Aktivieren des Fahrzeugsystems für einen Kaltstart, Öffnen eines Sperrventils zwischen einem ersten Kühlmittelkreislauf mit der Zusatzheizung und einem zweiten Kühlmittelkreislauf mit einem Kühlmitteltemperatursensor und Aktivieren einer Kühlmittelpumpe, so dass Kühlmittel im ersten Kühlmittelkreislauf den Kühlmitteltemperatursensor umspült;
- Erfassen eines zeitlichen Verlaufs eines Temperaturmesswerts des Kühlmitteltemperatursensors für eine vorbestimmte Zeitdauer ab dem Zeitpunkt des Aktivierens des Fahrzeugsystems,
- Ermitteln eines Verlaufs eines Gradienten des Verlaufs des Temperaturmesswerts;
- Auswerten des Verlaufs des Gradienten des Verlaufs des Temperaturmesswerts mithilfe eines Schwellenwertvergleichs, um festzustellen, ob die Zusatzheizung vor dem Kaltstart aktiviert war.

Weiterhin kann der Schwellenwertvergleich abhängig von einem Integrationswert des Gradienten des Verlaufs des Temperaturmesswerts durchgeführt werden.

Alternativ kann der Schwellenwertvergleich abhängig von einem Integrationswert eines Betrags des Gradienten des Verlaufs des Temperaturmesswerts durchgeführt werden.

Es kann festgestellt werden, dass die Zusatzheizung vor dem Kaltstart aktiviert war, wenn der Integrationswert einen vorgegebenen Schwellenwert übersteigt.

Das obige Verfahren bezieht sich auf ein Fahrzeugsystem mit einem Kühlmittelsystem für den Wärmetransport zwischen Komponenten in dem Fahrzeugsystem, wie z.B. einem Motorkühler zum Kühlen eines Verbrennungsmotors, einer Innenraumheizung zum Heizen eines Fahrzeuginnenraums sowie einer Zusatzheizung, die ausgebildet ist, um motorbetriebsunabhängig Wärmeenergie über das Kühlmittelsystem der Innenraumheizung zuzuführen. Diese Komponenten des Fahrzeugsystems sind über mehrere Kühlmittelkreisläufe miteinander verbunden, wobei der Wärmetransport durch ein in Kühlmittelleitungen der Kühlmittelkreisläufe zirkulierendes Kühlmittel realisiert wird. Auf diese Weise kann z.B. Abwärme des Verbrennungsmotors der Innenraumheizung zugeführt werden und der Fahrzeuginnenraum geheizt werden.

Eine Zusatzheizung ist in dem ersten Kühlmittelkreislauf des Kühlmittelsystems vorgesehen. Die Zusatzheizung ist in der Regel bei aktiviertem Verbrennungsmotor passiv geschaltet und leistet dann keinen Wärmeeintrag in das Kühlmittelsystem.

Während eines deaktivierten Zustands des Fahrzeugs kann insbesondere vor Fahrtbeginn die Zusatzheizung aktiviert werden. Dabei bilden die Zusatzheizung und die Innenraumheizung durch eine entsprechende Ventilabsperrung des Sperrventils einen geschlossenen Kreislauf, um die in der Zusatzheizung erzeugte Wärme gezielt in den Innenraum des Fahrzeugs einzubringen. Somit erwärmt sich das Kühlmittel in dem geschlossenen ersten Kühlmittelkreislauf, auch wenn das Motorsystem inaktiv ist.

Beim oder nach dem Kaltstart des Verbrennungsmotors finden in der Regel eine Vielzahl von Diagnosefunktionen statt. Da die Kenntnis über die Kühlmitteltemperatur emissionsrelevant ist, ist eine Diagnosefunktion auch für den Kühlmitteltemperatursensor erforderlich. Diese Diagnosefunktion wird u.a. beim Kaltstart des Verbrennungsmotors durchgeführt. Dabei wird in der Regel abhängig von einer Umgebungstemperatur und abhängig von der gemessenen Kühlmitteltemperatur eine Aussage getroffen, ob der Kühlmitteltemperatursensor funktionsfähig ist.

Der Wärmeeintrag durch die Zusatzheizung kann allgemein dazu führen, dass das Kühlsystem über den geschlossenen Kreislauf hinaus aufgewärmt wird. Dies führt zu einer Erwärmung des Kühlmittels in Teilen des Kühlmittelsystems, die auch durch den Kühlmitteltemperatursensor detektiert werden kann.

Eine Überwachung der Funktionsfähigkeit des Kühlmitteltemperatursensor, der auf einem Vergleich zwischen der Umgebungstemperatur und des Temperaturmesswerts des Kühlmitteltemperatursensors bei einem Kaltstart basiert, würde dann ggfs. einen Fehler anzeigen.

Da ein im inaktiven Betrieb des Motorsystems betriebene Zusatzheizung nicht in jedem Fahrzeugsystem durch ein entsprechendes elektrisches Signal signalisiert wird, ist es notwendig, ein vor dem Aktivieren des Motorsystems erfolgter Betrieb der Zusatzheizung in sonstiger Weise zu erkennen. Ist der Diagnosefunktion der vorangehende Betrieb der Zusatzheizung bekannt, kann dann die Diagnose ausgelassen werden.

Das obige Verfahren sieht dazu vor, dass nach dem Aktivieren des Motorsystems eine Kühlmittelpumpe für den zweiten Kühlmittelkreislauf aktiviert wird und das Kühlmittelsystem in einen Zustand versetzt wird, in dem der erste Kühlsystemkreislauf der Zusatzheizung und der Innenraumheizung mit dem zweiten Kühlmittelkreislauf des Kühlsystems verbunden wird. Wurde die Zusatzheizung vor Inbetriebnahme des Motorsystems aktiviert, so strömt nun erwärmtes Kühlmittel durch den zweiten Kühlmittelkreislaufund damit über den dort angeordneten Temperatursensor. Aufgrund der Durchmischung des erwärmten Kühlmittels aus der Zusatzheizung mit dem übrigen sich in der Regel auf einem anderen Temperaturniveau befindlichen Kühlmittel des zweiten Kühlmittelkreislauf, erfolgt auch bei einem Kaltstart nach einem Betrieb der Zusatzheizung aufgrund der anlaufenden Pumpe eine rasche und insbesondere nicht-monotone Temperaturänderung.

Um eine Temperaturerhöhung des Kühlmittels aufgrund des vorangegangenen Betriebs der Zusatzheizung besser detektieren zu können, wird gemäß dem obigen Verfahren vorgeschlagen, einen Gradienten der detektierten Kühlmitteltemperatur betragsmäßig zeitlich zu integrieren. Diese Integration erfolgt über einen festgelegten Zeitraum von z.B. bis zu 30 Sekunden, zu dem kein weiterer nennenswerter Wärmeeintrag z.B. durch einen elektrischen Zuheizer im zweiten Kühlmittelkreislauf oder aufgrund von Abwärme durch den Betrieb des Verbrennungsmotors erfolgen kann.

Dieser Integrationswert wird mit einem vorgegebenen Schwellenwert verglichen, um bei Überschreiten ein Signal zu erhalten, das angibt, dass die Zusatzheizung vor Kaltstart des Verbrennungsmotors aktiviert war.

Weiterhin kann der vorgegebene Schwellenwert fest vorgegeben sein oder abhängig von einer Umgebungstemperatur oder einer Motortemperatur bestimmt werden.

Die Auswertung des zeitlichen Integrationswert des Betrags des Gradienten der gemessenen Kühlmitteltemperatur ermöglicht es, eine Erhöhung der Kühlmitteltemperatur trotz der Schwankungen des Temperaturwerts besser erkennen zu können. Ein vorangehender Betrieb der Zusatzheizung kann dadurch zuverlässiger erkannt werden.

Gemäß einer Ausführungsform kann eine Diagnose des Kühlmitteltemperatursensors nur dann durchgeführt werden, wenn festgestellt wird, dass die Zusatzheizung vor dem Kaltstart nicht aktiviert war.

Gemäß einem weiteren Aspekt ist eine Vorrichtung zur Durchführung des obigen Verfahrens vorgesehen.

Kurzbeschreibung der Zeichnungen

Ausführungsformen werden nachfolgend anhand der beigefügten Zeichnungen näher erläutert. Es zeigen:

Figur 1 eine schematische Darstellung eines Fahrzeugsystems mit einem Kühlmittelsystem für den Wärmetransport in einem Kraftfahrzeug;

Figur 2 ein Flussdiagramm zur Veranschaulichung eines Verfahrens zum Erkennen einer vor dem Kaltstart eines Verbrennungsmotors aktivierten Zusatzheizung sowie zur Durchführung einer Diagnosefunktion für einen Kühlmitteltemperatursensor; und

Figur 3 ein Diagramm zur Veranschaulichung der Verläufe des Temperaturmesswerts, dessen Gradienten und von Integrationswerten des Gradienten.

Beschreibung von Ausführungsformen

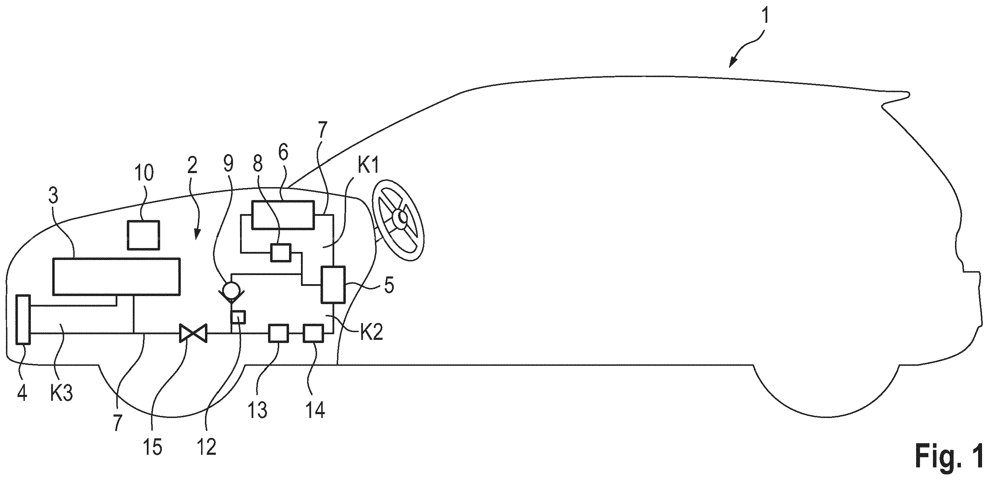

Figur 1 zeigt eine schematische Darstellung eines Fahrzeugs 1 mit einem Kühlsystem 2 zum Transportieren von Wärme von und zu Komponenten des Fahrzeugs 1. Das Fahrzeug umfasst einen Verbrennungsmotor 3, einen Motorkühler 4, eine Innenraumheizung 5 (Wärmetauscher), eine Zusatzheizung 6 und ggfs. einen elektrischen Zuheizer 13. Die Komponenten sind über Kühlmittelleitungen 7 in geschlossenen Kühlmittelkreisläufen miteinander verbunden. Ein erster Kühlmittelkreislauf umfasst eine Kühlmittelpumpe 8 zum Fördern des Kühlmittels durch das Kühlsystem 2.

Ein erster Kühlmittelkreislauf K1 umfasst die Zusatzheizung 6, die Innenraumheizung 5 und eine erste Kühlmittelpumpe 8. Ein zweiter Kühlmittelkreislauf K2 umfasst eine zweite Kühlmittelpumpe 14, den Zuheizer 13 und die Innenraumheizung 5. Ein dritter Kühlmittelkreislauf K3 umfasst den Verbrennungsmotor 3 und den Motorkühler 4.

Es ist ein erstes Sperrventil 9 vorgesehen, das als Rückschlagventil ausgebildet ist, um bei einem Betrieb der Zusatzheizung 6 bei deaktivierten Verbrennungsmotor 3 den ersten Kühlmittelkreislauf K1 als geschlossenen Kühlmittelkreislauf für das Kühlmittel zwischen der Zusatzheizung 6 und der Innenraumheizung 5 zu bilden. Der zweite Kühlmittelkreislauf K2 und der dritte Kühlmittelkreislauf K3 sind über ein steuerbares zweites Sperrventil 15 miteinander verbunden.

Die Funktion des Kühlsystems 2 wird in an sich bekannter Weise mithilfe eines Steuergeräts 10 gesteuert.

Nach dem Motorkaltstart des Verbrennungsmotors 3 wird durch das Steuergerät 10 die zweite Kühlmittelpumpe 14 aktiviert und dadurch das erste Sperrventil 9 aufgrund des Kühlmitteldrucks geöffnet und somit der zweiter Kühlmittelkreislauf K2 in Betrieb genommen. Durch das geöffnete Sperrventil 9 ist der zweite Kühlmittelkreislauf K2 mit dem ersten Kühlmittelkreislauf K1 in Verbindung.

Außerhalb des ersten Kühlmittelkreislaufs K1 für die Zusatzheizung 6 ist in dem zweiten Kühlmittelkreislauf K2 ein Kühlmitteltemperatursensor 12 vorgesehen, um einen Temperaturmesswert für die Kühlmitteltemperatur zu erfassen.

Aufgrund von gesetzlichen Vorgaben ist es notwendig, die Funktionsfähigkeit des Kühlmitteltemperatursensors 12 regelmäßig zu überprüfen, da die ordnungsgemäße Messung der Kühlmitteltemperatur emissionsrelevant ist.

Dazu wird in der Regel vorgesehen, zur Diagnose des Kühlmitteltemperatursensors 12 einen Vergleich zwischen der gemessenen Kühlmitteltemperatur und mindestens einer mithilfe eines weiteren Temperatursensors gemessenen weiteren Temperatur(en) vorzunehmen. Stimmen bei einem zuvor abgekühlten Motorsystem die gemessene Kühlmitteltemperatur und die weitere Temperatur im Wesentlichen überein, so wird von einer ordnungsgemäßen Funktion des Kühlmitteltemperatursensors 12 ausgegangen. Liegt eine Abweichung vor, so kann ein Fehler festgestellt werden.

Wenn jedoch vor einem Kaltstart des Verbrennungsmotors 3 die Zusatzheizung 6 aktiv war, ist ein Teil des Kühlmittels in dem Kühlsystem 2 bereits erwärmt. Eine dann stattfindende Diagnose hätte zur Folge, dass fälschlicherweise ein Fehler des Kühlmitteltemperatursensors 12 festgestellt wird. Somit ist es wünschenswert, einen Betrieb der Zusatzheizung 6 vor dem Kaltstart des Verbrennungsmotors 3 zu erkennen.

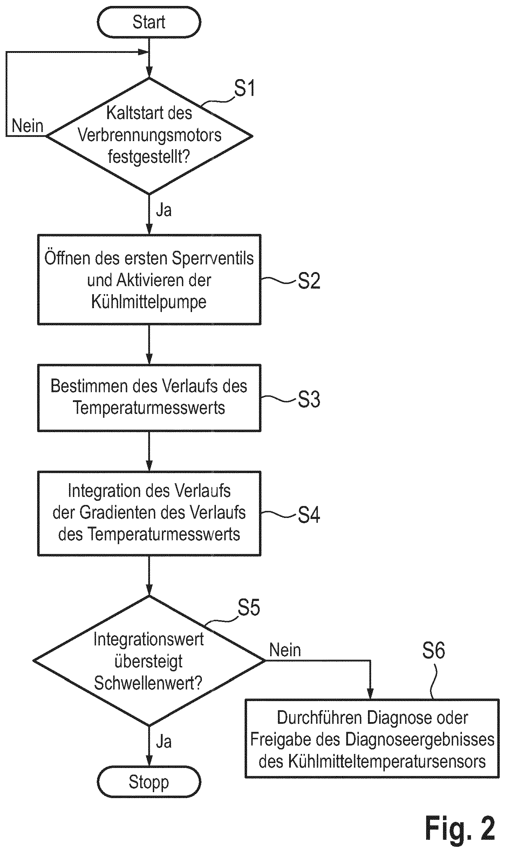

Die Diagnosefunktion für den Kühlmitteltemperatursensor 12 wird in dem Steuergerät 10 durchgeführt. In dem Steuergerät 10 ist als Software und/oder Hardware ein Verfahren implementiert, das anhand des Flussdiagramms der Figur 2 anschaulicher beschrieben wird.

Im Schritt S1 wird überprüft, ob ein Kaltstart des Verbrennungsmotors erfolgt ist. Ein Kaltstart des Verbrennungsmotors 3 liegt vor, wenn der Abschaltzeitpunkt des Verbrennungsmotors 3 eine bestimmte Mindestdauer zurückliegt und ein Signal beispielsweise auf Klemme 15 vorliegt. Wird ein Kaltstart des Verbrennungsmotors 3 festgestellt (Alternative: Ja), so wird das Verfahren mit Schritt S2 fortgesetzt, anderenfalls (Alternative: Nein) wird zu Schritt S1 zurückgesprungen.

In Schritt S2 wird das erste Sperrventil 9 geöffnet und die erste Kühlmittelpumpe 8 aktiviert. Im Falle eines Rückschlagventils als Sperrventil 9 wird dieses durch die Aktivierung der erste Kühlmittelpumpe 8 geöffnet. Das Kühlmittel wird nun durch den zweiten Kühlmittelkreislauf K2 befördert.

Der durch den Kühlmitteltemperatursensor 12 gemessene Temperaturmesswert wird in Schritt S3 überwacht und deren Verlauf aufgezeichnet.

Für einen vorgegebenen Zeitraum, der mit dem Zeitpunkt des Kaltstartens des Verbrennungsmotors 3 beginnt, wird in Schritt S4 basierend auf dem erfassten Verlauf des Temperaturmesswerts eine Zeitreihe von Gradientenwerten des Temperaturmesswerts ermittelt und zeitlich aufintegriert. Dies führt zu einer Erhöhung der feststellbaren Temperaturänderung, die unmittelbar nach dem Aktivieren der ersten Kühlmittelpumpe 8 feststellbar ist, so dass in zuverlässiger Weise eine Erhöhung der Kühlmitteltemperatur durch einen vorangehenden Betrieb der Zusatzheizung 6 erkannt werden kann.

In einer alternativen Ausführungsform kann der Betrag des Gradienten des Verlaufs der gemessenen Kühlmitteltemperatur ausgewertet werden. Dies ermöglicht es, noch genauer eine Temperaturerhöhung des Kühlmittels aufgrund des Betriebs der Zusatzheizung zu erkennen. Die Zeitdauer der Integration kann beispielsweise zwischen 10 und 30 s festgelegt sein. Die Integration ermöglicht es, ungeachtet des Aufbaus des Kühlsystems 2 eine Erhöhung der gemessenen Kühlmitteltemperatur unmittelbar nach dem Kaltstart zuverlässig zu detektieren, die in der Regel zu einem unbestimmten Zeitraum nach Kaltstart des Verbrennungsmotors 3 am Kühlmitteltemperatursensor 12 auftritt.

In Schritt S5 wird überprüft, ob eine Diagnose des Kühlmitteltemperatursensors 12 vorgenommen werden soll. Wird festgestellt, dass der in Schritt S4 bestimmte Integrationswert einen Schwellenwert übersteigt (Alternative: Ja), so wird auf einen Betrieb der Zusatzheizung 6 geschlossen und das Verfahren ohne Diagnose beendet. Andernfalls (Alternative: Nein) wird in Schritt S6 eine Diagnose des Kühlmitteltemperatursensors 12 durch Vergleichen des Kühlmitteltemperaturmesswerts mit einem Umgebungstemperaturwert vorgenommen, der in an sich bekannter Weise in dem Steuergerät 10 bereitgestellt wird oder gemessen wird.

Die Temperaturwerte für den Temperaturvergleich der Diagnose werden noch vor Start des Motorsystems gespeichert. Im weiteren Verlauf wird das Diagnoseergebnis abhängig von der Überprüfung des Schritts S5 freigegeben.

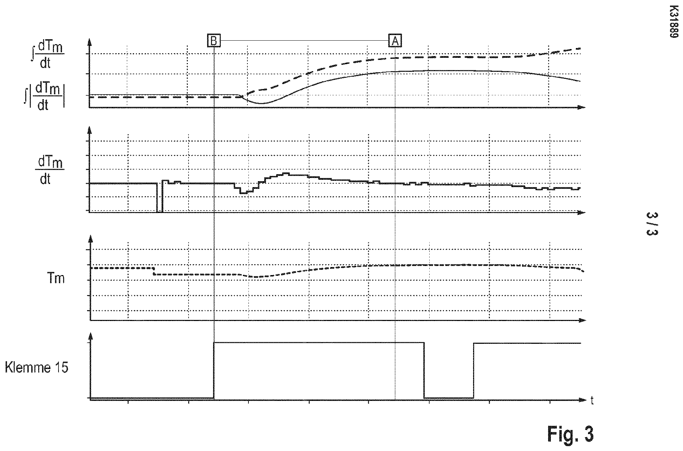

In Figur 3 ist veranschulichend die Verläufe eines Klemme15-Signals, eines Temperaturmesswerts Tm, eines Gradienten des Temperaturmesswerts $\frac{dT_m}{dt}$ und eines Integrationswerts des Gradienten des Temperaturmesswerts $\int \frac{dT_m}{dt}$ sowie eines Integrationswerts des Betrags des Gradienten des Temperaturmesswerts $\int \left| \frac{dT_m}{dt} \right|$ dargestellt.

Man erkennt, dass die Detektionsgenauigkeit eine erhöhten Kühlmitteltemperatur nach dem Kaltstart durch den integrierten Gradienten deutlich gegenüber der reinen Auswertung des Gradientenwerts verbessert ist. Eine weitere Verbesserung ergibt sich durch die Integration des Betrags des Gradientenwerts.

**Bezugszeichenliste**

| | |
|---|---|
| 1 | Fahrzeug |
| 2 | Kühlsystem |
| 3 | Verbrennungsmotor |
| 4 | Motorkühler |
| 5 | Innenraumheizung |
| 6 | Zusatzheizung |
| 7 | Kühlmittelleitungen |
| 8 | Kühlmittelpumpe |
| 9 | erstes Sperrventil |
| 10 | Steuergerät |
| K1 | erster Kühlmittelkreislauf |
| K2 | zweiter Kühlmittelkreislauf |
| K3 | dritter Kühlmittelkreislauf |
| 12 | Kühlmitteltemperatursensor |
| 13 | Zuheizer |
| 14 | zweite Kühlmittelpumpe |
| 15 | zweites Sperrventil |

**Patentansprüche**

**1.** Verfahren zum Erkennen eines Betriebs einer motorunabhängigen Zusatzheizung in einem Kühlsystem (2) mit mehreren Kühlmittelkreisläufen (K1, K2, K3) in einem Fahrzeugsystem mit einer Zusatzheizung (6), mit folgenden Schritten:

- Bei oder nach Aktivieren des Fahrzeugsystems für einen Kaltstart, Öffnen (S2) eines Sperrventils (9) zwischen einem ersten Kühlmittelkreislauf (K1) mit der Zusatzheizung (6) und einem zweiten Kühlmittelkreislauf (K2) mit einem Kühlmitteltemperatursensor (12) und Aktivieren einer Kühlmittelpumpe (8), so dass Kühlmittel aus dem ersten Kühlmittelkreislauf (K1) den Kühlmitteltemperatursensor (12) umspült;
- Erfassen (S3) eines zeitlichen Verlaufs eines Temperaturmesswerts des Kühlmitteltemperatursensors (12) für eine vorbestimmte Zeitdauer ab dem Zeitpunkt des Aktivierens des Fahrzeugsystems,
- Ermitteln (S4) eines Verlaufs eines Gradienten des Verlaufs des Temperaturmesswerts;
- Auswerten (S5, S6) des Verlaufs des Gradienten des Verlaufs des Temperaturmesswerts mithilfe eines Schwellenwertvergleichs, um festzustellen, ob die Zusatzheizung (6) vor dem Kaltstart aktiviert war.

**2.** Verfahren nach Anspruch 1, wobei der Schwellenwertvergleich abhängig von einem Integrationswert des Gradienten des Verlaufs des Temperaturmesswerts durchgeführt wird.

**3.** Verfahren nach Anspruch 1, wobei der Schwellenwertvergleich abhängig von einem Integrationswert eines Betrags des Gradienten des Verlaufs des Temperaturmesswerts durchgeführt wird.

**4.** Verfahren nach Anspruch 2 oder 3, wobei festgestellt wird, dass die Zusatzheizung (6) vor dem Kaltstart aktiviert war, wenn der Integrationswert einen vorgegebenen Schwellenwert übersteigt.

**5.** Verfahren nach Anspruch 4, wobei der Schwellenwert fest vorgegeben ist oder abhängig von einer Umgebungstemperatur bestimmt wird.

**6.** Verfahren nach einem der Ansprüche 1 bis 4, wobei eine Diagnose des Kühlmitteltemperatursensors (12) nur dann durchgeführt oder nur dann freigegeben wird, wenn festgestellt wird, dass die Zusatzheizung (6) vor dem Kaltstart nicht aktiviert war.

**7.** Vorrichtung, zur Durchführung eines Verfahrens nach einem der Ansprüche 1 bis 6.

**8.** Fahrzeugsystem eines Fahrzeugs, umfassend:

- einen ersten Kühlmittelkreislauf (K1) eines Kühlsystems (2) mit einer Zusatzheizung (6);
- einem zweiten Kühlmittelkreislauf (K2) des Kühlsystems (2) mit einem Kühlmitteltemperatursensor (12); und
- eine Vorrichtung nach Anspruch 7.

**Claims**

**1.** Method for detecting an operation of an engine-independent support heating process in a cooling system (2) having multiple coolant circuits (K1, K2, K3) in a vehicle system having a support heating apparatus (6), comprising the following steps:

- when or after activating the vehicle system for a cold start, opening (S2) a shut-off valve (9) between a first coolant circuit (K1) having the support heating apparatus (6) and a second coolant circuit (K2) having a coolant temperature sensor (12) and activating a coolant pump (8) so that coolant from the first coolant circuit (K1) flows around the coolant temperature sensor (12);
- recording (S3) a time course of a temperature measurement value of the coolant temperature sensor (12) for a predetermined time period from the time of activation of the vehicle system,
- ascertaining (S4) a course of a gradient of the course of the temperature measurement value;
- evaluating (S5, S6) the course of the gradient of the course of the temperature measurement value using a threshold comparison to establish whether the support heating apparatus (6) was activated before the cold start.

**2.** Method according to claim 1, wherein the threshold comparison is performed depending on an integration value of the gradient of the course of the temperature measurement value.

**3.** Method according to claim 1, wherein the threshold comparison is performed depending on an integration value of an amount of the gradient of the course of the temperature measurement value.

**4.** Method according to claim 2 or 3, wherein it is established that the support heating apparatus (6) was activated before the cold start if the integration value exceeds a specified threshold.

**5.** Method according to claim 4, wherein the threshold is fixed or is determined depending on an ambient temperature.

**6.** Method according to any of claims 1 to 4, wherein a diagnosis of the coolant temperature sensor (12) is only performed or is only triggered if it is established that the support heating apparatus (6) was not activated before the cold start.

**7.** Device for performing a method according to any of claims 1 to 6.

**8.** Vehicle system of a vehicle, comprising:

- a first coolant circuit (K1) of a cooling system (2) having a support heating apparatus (6);
- a second coolant circuit (K2) of the cooling system (2) having a coolant temperature sensor (12); and
- a device according to claim 7.

**Revendications**

**1.** Procédé pour la détection d'un fonctionnement d'un chauffage additionnel indépendant du moteur dans un système de refroidissement (2) comportant plusieurs circuits de liquide de refroidissement (K1, K2, K3) dans un système de véhicule comportant un chauffage additionnel (6), comportant les étapes suivantes :

- pendant ou après l'activation du système de véhicule pour un démarrage à froid, l'ouverture (S2) d'une soupape d'arrêt (9) entre un premier circuit de liquide de refroidissement (K1) comportant le chauffage additionnel (6) et un deuxième circuit de liquide de refroidissement (K2) comportant un capteur de température de liquide de refroidissement (12) et l'activation d'une pompe à liquide de refroidissement (8), de sorte que du liquide de refroidissement provenant du premier circuit de liquide de refroidissement (K1) baigne le capteur de température de liquide de refroidissement (12) ;
- la détection (S3) d'une évolution dans le temps d'une valeur de mesure de température du capteur de température de liquide de refroidissement (12) pendant une période de temps prédéterminée à partir du moment de l'activation du système de véhicule,
- l'établissement (S4) d'une évolution d'un gradient de l'évolution de la valeur de mesure de température ;
- l'évaluation (S5, S6) de l'évolution du gradient de l'évolution de la valeur de mesure de température à l'aide d'une comparaison de valeur seuil afin de constater si le chauffage additionnel (6) était activé avant le démarrage à froid.

**2.** Procédé selon la revendication 1, dans lequel la comparaison de valeur seuil est réalisée en fonction d'une valeur d'intégration du gradient de l'évolution de la valeur de mesure de température.

**3.** Procédé selon la revendication 1, dans lequel la comparaison de valeur seuil est réalisée en fonction d'une valeur d'intégration d'une valeur absolue du gradient de l'évolution de la valeur de mesure de température.

**4.** Procédé selon la revendication 2 ou 3, dans lequel il est constaté que le chauffage additionnel (6) était activé avant le démarrage à froid si la valeur d'intégration dépasse par le haut une valeur seuil prédéfinie.

**5.** Procédé selon la revendication 4, dans lequel la valeur seuil est prédéfinie de manière fixe ou est déterminée en fonction d'une température ambiante.

**6.** Procédé selon l'une des revendications 1 à 4, dans lequel un diagnostic du capteur de température de liquide de refroidissement (12) est réalisé ou approuvé uniquement lorsqu'il est constaté que le chauffage additionnel (6) n'était pas activé avant le démarrage à froid.

**7.** Dispositif pour la réalisation d'un procédé selon l'une des revendications 1 à 6.

**8.** Système de véhicule d'un véhicule, comprenant :

- un premier circuit de liquide de refroidissement (K1) d'un système de refroidissement (2) comportant un chauffage additionnel (6) ;
- un deuxième circuit de liquide de refroidissement (K2) du système de refroidissement (2) comportant un capteur de température de liquide de refroidissement (12) ; et
- un dispositif selon la revendication 7.

Fig. 1

**Fig. 2**

Fig. 3

$\int \frac{dTm}{dt}$

$\int \left| \frac{dTm}{dt} \right|$

$\frac{dTm}{dt}$

Tm

Klemme 15

K31889

3 / 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009058514 B3
- DE 102005003251 B4
- DE 102011088409 B3
- DE 102009057586 A1
- DE 102007045370 A1
- DE 4426494 A1